# FASCICULE DE BREVET EUROPEEN

(11) **EP 2 252 159 B1**
(45) Date de publication et mention de la délivrance du brevet: **26.12.2018**
(21) Numéro de dépôt: 09718844.5
(22) Date de dépôt: 24.02.2009
(51) Int. Cl.: A23C 19/076, A23C 19/082, A23C 19/097, A23C 19/02

(54) **PROCÉDÉ DE FABRICATION D'UN FROMAGE FRAIS THERMISÉ ET FROMAGE OBTENU**
VERFAHREN ZUR HERSTELLUNG VON THERMISIERTEM UNGEREIFTEM KÄSE UND AUF DIESE WEISE HERGESTELLTER KÄSE
METHOD OF PRODUCING A THERMIZED UNRIPENED CHEESE AND CHEESE OBTAINED

(30) Priorité: 28.02.2008 FR 0851283
(43) Date de publication de la demande: 24.11.2010
(73) Titulaire: Fromageries Bel, 92150 Suresnes (FR)
(72) Inventeur: FURLING, Olivier, F-72300 Sable sur Sarthe (FR)
(74) Mandataire: Lavoix
(86) Numéro de dépôt international: PCT/FR2009/050292
(87) Numéro de publication internationale: WO 2009/112753

(56) Documents cités:
- EP-A- 0 721 739
- EP-A- 0 997 073
- DE-A1- 2 146 955
- DE-A1- 4 423 988
- FR-A1- 2 874 306
- FR-A1- 2 896 125
- US-A- 2 962 379
- US-A- 3 117 870
- US-A- 5 079 024
- US-B1- 6 238 717
- DATABASE FSTA [Online] INTERNATIONAL FOOD INFORMATION SERVICE (IFIS), FRANkFURT-MAIN, DE; 1978, KUZNETSOVA L I ET AL: "Method of obtaining sterilized curds with a fruit filler." XP002500051 Database accession no. 79-2-03-g0232

## Description

La présente invention est relative à la fabrication d'un fromage frais ayant une durée de conservation améliorée.

Les fromages frais sont une famille de fromages caractérisés par une pâte humide acide, peu minéralisée et de faible cohésion ayant un goût acidulé et de l'onctuosité. Ces fromages frais sont obtenus par coagulation, de préférence acide, du lait, puis égouttage du coagulum obtenu. D'une façon très générale, ces fromages n'ont pas subi de phase d'affinage.

Parmi les fromages frais, on distingue les fromages frais thermisés qui ont subi un traitement thermique avant conditionnement. On distingue également les « cream-cheese » qui sont obtenus par traitement thermique de caillé frais en présence de stabilisants et/ou de texturants telles que des gommes. On distingue enfin les fromages frais fondus qui sont obtenus par traitement thermique de caillé frais ou de fromage frais en présence de sels de fonte.

Pour fabriquer de tels fromages, on commence par préparer des caillés frais par coagulation de lait qui, de préférence, est d'abord standardisé en matière grasse ou écrémé ou pasteurisé voire homogénéisé pour réduire la taille des globules gras. Ce lait peut être traité en utilisant des techniques de concentration membranaires afin d'augmenter les rendements par incorporation de protéines sériques dans le caillé. Les caillés sont obtenus par la coagulation du lait par action d'enzymes coagulantes ou par acidification.

D'une façon générale, la coagulation par enzymes utilise notamment la chymosine présente dans la présure provenant essentiellement de l'estomac des veaux, mais d'autres enzymes d'origine végétale ou microbienne peuvent être utilisées. Les caillés obtenus après élimination partielle ou totale du lactosérum sont fermes, et ont un pH proche de la neutralité. Ces caillés sont appelés « caillés présure » et servent essentiellement à la fabrication de pâtes pressées et de pâtes molles.

La coagulation acide est obtenue par l'action de ferments lactiques et/ou d'acides alimentaires. Le pH du lait est alors abaissé jusqu'à son poids isoélectrique, proche de 4,7, ce qui entraîne la précipitation des protéines. Les caillés sont alors obtenus par élimination du lactosérum par égouttage spontané ou par centrifugation. Ces caillés sont friables et présentent des notes aromatiques fraîches voire légèrement acidulées, caractéristique des produits appartenant à la famille des fromages frais, dont le fromage frais thermisé.

Les caillés acides ainsi obtenus peuvent être, selon le produit final que l'on souhaite fabriquer, enrichis ou non en crème.

Une variante du procédé de fabrication de caillés pour fromages frais consiste à reconstituer des caillés par mélange et hydratation jusqu'à la teneur en extrait-sec souhaité d'un mélange de poudre de lait standardisée en matière grasse et /ou de concentrés protéiques laitiers et/ou de matières grasses laitières selon le taux final de matière grasse désirée dans le produit final. Le mélange obtenu est alors ensemencé en microorganismes générateurs de composés aromatiques conférant une « note fraîche » au produit à la température optimale de développement des microorganismes ensemencés, une fois les notes aromatiques souhaitées obtenues la maturation est stoppée par traitement thermique ou mise au froid (congélation) pour report. L'avantage de ce procédé réside dans le fait que sa fabrication peut-être effectuée hors zone de production de lait let notamment dans des pays sans production laitière.

A partir des caillés ainsi obtenus, on peut fabriquer différents types de fromage frais :
- des quark, tvorog, labneh (Moyen-Orient et Balkans), Queso Blanco (Amérique du Sud), Petit-Suisse, Cottage-Cheese, etc...

Ces produits sont obtenus après simple refroidissement et éventuellement après mélange avec des ingrédients aromatiques et/ou éléments figurés (fruits, légumes...).
- des fromages frais thermisés, similaires aux produits précédents, mais qui ont été fabriqués en subissant une étape complémentaire de thermisation constituée d'un maintien à une température entre 55 et 75°C pendant 30 à 60 secondes effectuée après incorporation de crème, d'éléments figurés, d'aromates, voire de stabilisants. De tels produits peuvent être moussés.
- des « cream-cheese » qui sont des caillés traités thermiquement (à 80°C pendant un temps pouvant atteindre 20 mn) ou non traités thermiquement. Dans ces produits, on a incorporé au caillé standardisé ou non en matière grasse, du sel et des stabilisants et/ou texturants telles que des gommes. Après incorporation de ces éléments, le mélange est éventuellement traité thermiquement et homogénéisé puis éventuellement aromatisé avec des fruits, des aromates, des légumes, des éléments figurés, etc... De tels produits peuvent être conditionnés aussi bien à chaud qu'à froid.
- des fromages frais fondus, obtenus à partir de caillé égoutté enrichi ou non en crème, auquel on a fait subir un procédé de fonte, c'est-à-dire un traitement thermique en présence de sels de fonte, conditionnés de préférence à chaud.

Il est à noter que tous ces fromages frais et thermisés ont subis des traitements thermiques à des températures qui restent toujours inférieures à 90°C, voire inférieures à 80°C afin de maintenir un maximum de caractéristiques aromatiques qui pourraient être détruites par des traitements à température supérieure compte tenu de la fragilité des caillés utilisés.

Les techniques de fabrication de cette famille de produit sont largement décrites dans la littérature et notamment dans le livre de FOX, P. : « Cheese Chemistry, Physics and Microbiology NC Elsevier (2004) - Vol. 2, pages 301 - 348).

Les produits de cette famille qui représentent une part importante du marché mondial du fromage sont largement appréciés par les consommateurs. Cependant, ils présentent l'inconvénient d'avoir une durée de conservation faible qui, même pour les produits traités thermiquement, n'excède pas trois mois. En outre, ces produits ne peuvent pas être conservés hors froid.

De ce fait, ces produits sont mal adaptés à des consommations hors domicile, ou dans des pays ou n'existent pas des circuits de froid.

Afin d'améliorer la durée de conservation de ces produits, on a proposé d'utiliser des conservateurs. Mais, l'utilisation de tels additifs présente des problèmes en termes de sécurité alimentaire et d'image du produit.

EP 0 721 739 et US 5 079 024 décrivent des procédés de fabrication d'un fromage de type « cream-cheese » maigre.

L'abrégé de l'article Kuznetsova et al : « Method of obtaining sterilised curds with a fruit filler», Database FSTA [Online] International Food Information Service (IFIS), Frankfurt-Main, 1978 décrit un procédé de fabrication d'un caillé stérilisé.

US 3 117 870 décrit un procédé de fabrication d'un cottage cheese.

DE 21 46 955 décrit un procédé de fabrication d'un produit fromager à partir d'un mélange contenant du cottage cheese.

DE 44 23 988 et EP 0 997 073 décrivent des procédés de fabrication d'un fromage fondu.

US 6 238 717 décrit un procédé de fabrication d'un fromage de type cottage cheese.

US 2 962 379 décrit une méthode de conservation d'un cottage cheese.

FR 2 874 306 décrit un procédé d'assainissement d'un produit fromager visqueux.

FR 2 896 125 décrit un procédé pour fabriquer un fromage à partir d'une matière première fromagère broyée.

On a également proposé d'augmenter la température du traitement thermique des produits de façon à effectuer un traitement de stérilisation. Malheureusement, la fragilité des caillés et des fromages frais est telle que ces traitements de stérilisation conduisent à des pertes aromatiques et à l'apparition d'un goût de cuit qui limite considérablement l'utilisation de tels traitements. En particulier, même pour des fromages frais fondus, et contrairement aux fromages fondus issus de pâtes pressées, des traitements thermiques à des températures supérieures à 90°C, voire supérieure à 80°C, ont des effets déplorables sur les qualités gustatives des fromages.

Le fait qu'il n'est pas possible de traiter de tels fromages à des températures suffisamment élevées pour assurer une bonne stérilisation présente l'inconvénient d'engendrer des risques sanitaires, notamment du fait de la résistance à la température de micro-organismes pathogènes ou potentiellement pathogènes aux températures auxquelles sont effectuées des traitements thermiques de ces fromages. C'est notamment la raison pour laquelle la durée de conservation est limitée.

Le but de la présente invention est de remédier à ces inconvénients en proposant un moyen de fabriquer un fromage frais thermisé, éventuellement du type « cream-cheese » ou du type « fromage frais fondu », ayant une durée de vie améliorée et pouvant être conservé pendant un temps significatif hors froid.

A cet effet, l'invention a pour objet un procédé de fabrication d'un fromage selon la revendication 1.

Selon des modes particuliers de réalisation, le procédé peut comporter l'une ou plusieurs des caractéristiques mentionnées dans les revendications dépendantes 2 à 9, prise(s) isolément ou selon toutes les combinaisons techniquement possibles.

Ce procédé permet de fabriquer des fromages frais thermisés dont la durée de conservation au froid, c'est-à-dire entre 4 et 6°C, peut être supérieure de 6 mois et pouvant être conservés partiellement hors froid pendant un temps pouvant atteindre trois mois, ces fromages ayant conservé les caractéristiques organoleptiques et notamment le goût de frais des fromages frais thermisés classiques.

En effet, les inventeurs ont constaté de façon tout à fait inattendue que l'utilisation du traitement thermique par chauffage ohmique de cette famille de produits jusqu'à des températures de 140°C était possible sans affecter leur texture et en conservant le goût de frais, caractéristique de ce type de fromage, et cela sans générer le goût de cuit.

Du fromage ayant les caractéristiques organoleptiques et texturales d'un fromage frais thermisé susceptible d'être obtenu par ce procédé est décrit, il a une durée de conservation au froid supérieure à 6 mois avec, éventuellement, des périodes hors froid pouvant atteindre 3 mois.

Le fromage peut avoir les caractéristiques organoleptiques et texturales d'un fromage du type « cream-cheese », ayant une durée de conservation au froid supérieure à 6 mois avec, éventuellement, des périodes hors froid pouvant atteindre 3 mois..

Le fromage peut, aussi, avoir les caractéristiques organoleptiques et texturales d'un formage frais fondu, ayant une durée de conservation au froid supérieure à...6 mois avec, éventuellement, des périodes hors froid pouvant atteindre 3 mois.).

Ces fromages peuvent être réalisés aussi bien à partir de lait de vache que de lait de chèvre, de lait de brebis, de bufflone ou toute autre espèce animale élevée à cet effet, auquel on peut ajouter de la matière grasse qui peut être d'origine laitière mais aussi d'origine végétale (huile de colza, de tournesol, de soja, d'olive etc...). Ces fromages ont un extrait sec supérieur à 20% et un taux de matière grasse qui peut être compris entre 0 et 75% (exprimé en gras sur sec).

L'invention va maintenant être décrite de façon plus précise mais non limitative en regard des figures annexées, dans lesquelles :
- la figure 1 représente de façon schématique une chambre de traitement par chauffage ohmique de fromage en mode continu ;
- la figure 2 représente de façon schématique une chambre de traitement par chauffage ohmique de fromage dans un mode discontinu ;
- la figure 3 est un profil sensoriel sur deux essais de cuisson par chauffage ohmique d'un fromage frais fondu.

Pour fabriquer le fromage frais thermisé, on commence par préparer un caillé de fromagerie par coagulation de lait standardisé en matière grasse et en protéine. De façon connue, la coagulation peut être réalisée, soit par voie enzymatique, notamment à l'aide de chymosine ou de toute autre enzyme entraînant la coagulation du lait, tels que les enzymes d'origine végétale ou microbienne, soit, préférentiellement, par l'action d'acide alimentaire tel que l'acide lactique et/ou par action de ferments lactiques. Ce deuxième mode de réalisation est préféré car il favorise la genèse de composés aromatiques. Les ferments utilisés sont les ferments utilisés traditionnellement en fromagerie ou dans la fabrication de produits laitiers fermentés, et ce sont notamment :
- les lactobacilles telle que lactobacillus acidophilus, lactobacillus helveticus, et lactobacillus delbruecki lactis, ou bulgaricus, lactobacillus casei, lactobacillus plantarum ;
- des streptoccoques, tels que streptococcus thermophilus ;
- des lactoccoques tels que lactococcus lactis, ou lactococcus cremoris ;
- des leuconostoc.

Ces bactéries assurent l'acidification nécessaire à l'obtention du point isoélectrique du lait (pH = 4,7) où se produit la coagulation. Il assure aussi la formation de composés aromatiques caractéristiques des fromages frais (acétoine, diacétyl, acétaldéhyde, etc...).

En outre, on peut conférer des avantages nutritionnels complémentaires au produit fini en utilisant également en complément des bactéries à effet probiotique, tel que lactobacillus reuteri ou des bifidobactéries.

Après coagulation, le lactoserum est éliminé du coagulum obtenu, par exemple par égouttage spontané, éventuellement accéléré par des moyens mécaniques, ou par centrifugation. On peut en outre ajouter un certain nombre d'additifs et obtenir ainsi une pâte fromagère intermédiaire qui sera décrite plus en détail ultérieurement. En effet, selon que cette pâte fromagère est constituée uniquement de coagulum égoutté ou qu'il a fait l'objet d'ajout varié, la pâte fromagère intermédiaire permet d'obtenir soit un fromage frais thermisé simple, soit un « cream-cheese » soit un fromage frais fondu.

On notera que, comme indiqué précédemment, le caillé peut être un caillé reconstitué obtenu par mélange de concentré protéique, de préférence laitier, et de matières grasses animales ou végétales.

Dans tous les cas, la pâte fromagère intermédiaire est soumise à un traitement thermique dans un échangeur jusqu'à une température inférieure à 90°C, et de préférence inférieure à 80°C, voire inf érieure à 60°C. Le produit ainsi traité est éventuellement homogénéisé. L'échangeur utilisé est par exemple un échangeur thermique à surface raclée.

Dans un mode de réalisation particulier, ce traitement thermique est un chauffage au-dessus de 50°C.

Dans un deuxième mode de réalisation préférentiel, ce traitement thermique est essentiellement un mélange à une température comprise entre 40°C et 50°C du caillé obtenu par égouttage et des différents additifs qui sont ajoutés pour réaliser la pâte fromagère intermédiaire.

Dans tous les cas, le produit obtenu à l'étape précédente est soumis à une opération de texturation à la même température que la température du traitement précédent. Cette opération de texturation a pour but d'ajuster la viscosité de la pâte.

Le produit ainsi obtenu est alors transféré dans un réacteur de traitement par chauffage ohmique où il est soumis à un traitement thermique à une température comprise entre 90°C et 145°C pendant un e durée comprise entre 10 s et 5 mn. De préférence ce traitement thermique est effectué à une température supérieure à 105°C et mieux encore supérieure à 110°C. Ce traitement thermique par chauffage ohmique a l'avantage de permettre d'obtenir un fromage qui a des caractéristiques texturales et organoleptiques proches de celles d'un fromage frais thermisé, d'un « cream-cheese » ou d'un fromage pré-fondu qui, en outre, n'a plus de flore résiduelle et qui, de ce fait, présente une durée de vie prolongée au cours de laquelle il conserve ses qualités, notamment une note aromatique fraîche. En outre, ce fromage conserve une bonne sécurité alimentaire par l'élimination des bactéries pathogènes ou potentiellement pathogènes.

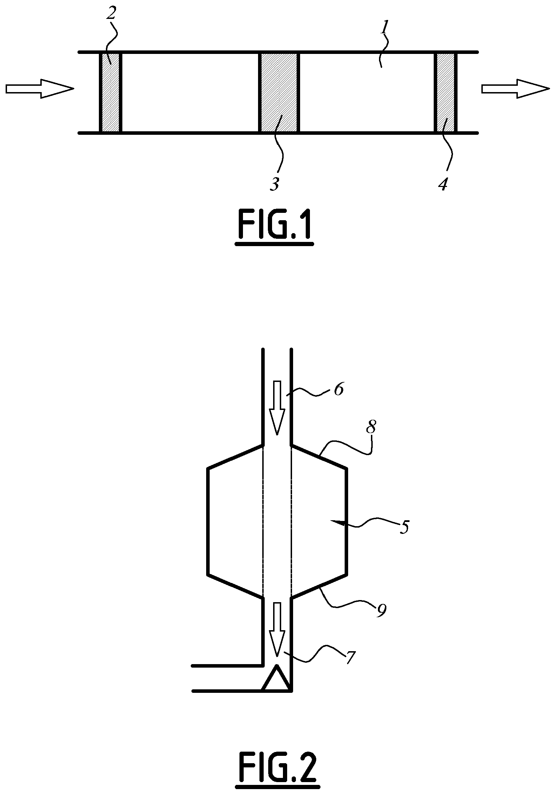

Le traitement thermique par chauffage ohmique est un traitement thermique de fromage qui est connu en lui-même et qui, habituellement, est utilisé pour effectuer un traitement de pasteurisation. Ce traitement est effectué dans des installations de traitement thermique en continu, telles que représentées à la figure 1, où des installations de traitement thermique permettant d'effectuer un traitement en discontinu tel que représenté à la figure 2.

Pour effectuer un traitement thermique en continu, l'installation représentée à la figure 1 comporte une chambre tubulaire 1 qui comprend trois électrodes annulaires 2, 3 et 4. Deux électrodes annulaires 2 et 4 sont reliées au neutre et une électrode annulaire 3 est reliée à une phase d'une alimentation électrique triphasée.

Lorsque la pâte fromagère circule dans cette chambre annulaire et que les électrodes sont reliées à une source d'énergie électrique, un courant électrique circule à travers la pâte fromagère entre les différentes électrodes. Cette circulation de courant électrique entraîne un chauffage par effet joule de la pâte fromagère. Ce chauffage électrique à l'avantage de se faire dans la masse de façon homogène ce qui évite les surchauffes que l'on observe dans les installations de chauffage habituelles. Il en résulte que la pâte peut être chauffée uniformément à des températures relativement élevées sans qu'apparaissent des défauts organoleptiques (goût de cuit) liés à des zones de surchauffes (le long des parois par exemple).

Dans le deuxième mode de réalisation, représenté à la figure 2, le fromage est introduit dans une chambre verticale 5 qui comporte une arrivée de pâte fromagère par la partie supérieure 6, et une évacuation par la partie inférieure 7. Dans sa partie supérieure, la chambre de chauffage 5 comporte une première électrode constituant une buse 8, et à sa partie inférieure, une deuxième électrode formant réceptacle 9. Lorsque la pâte fromagère arrive dans cette chambre dont le diamètre est plus important que celui des canalisations d'amenée et d'évacuation de la pâte fromagère, la pâte fromagère est traversée par un courant électrique qui la chauffe de façon homogène. On obtient ainsi des traitements thermiques qui ont les mêmes qualités que ceux qu'on obtient à l'aide des installations de traitement en continu.

Ces installations de chauffage ohmique de fromage peuvent également comporter des dispositifs de type mélangeur dynamique qui ont l'avantage d'homogénéiser le produit en température dans une section de l'installation.

Après cette opération de traitement thermique par chauffage ohmique, la pâte fromagère obtenue est refroidie par un dispositif du type flash connu en lui-même ou dans un échangeur de chaleur classique jusqu'à la température de conditionnement. Avant conditionnement, la pâte fromagère peut éventuellement être soumise à un traitement complémentaire de texturation pour régler la viscosité finale. Dans tous les cas, la pâte fromagère est ensuite conditionnée, par exemple dans des portions emballées dans de l'aluminium ou dans des barquettes ou dans des pots ou dans tout autre conditionnement approprié.

Comme on l'a indiqué précédemment, selon le mode de préparation de la pâte fromagère intermédiaire, on obtient soit un fromage frais thermisé, soit un « cream-cheese », soit un fromage frais fondu.

Pour réaliser le fromage frais thermisé, après égouttage du coagulum, le caillé est éventuellement enrichi en crème ou en une autre matière grasse selon la teneur en matière grasse souhaitée dans le produit fini. Eventuellement, on peut introduire en outre des concentrés protéiques laitiers (caséines, caséinates, etc...), des substances aromatiques, des substances nutritionnelles tels que des oligo-éléments, des vitamines, voire des produits laitiers fermentés, tels que des yaourts, du kéfir, du labneh ou autres produits fermentés connus. Le total de ces additions peut atteindre jusqu'à 30% par au poids du produit fini. L'ajout de ces produits peut être utile pour ajuster notamment les caractères organoleptiques du produit final et en particulier pour lui conférer une note de produit fermenté.

Pour fabriquer des fromages du type « cream-cheese », on incorpore en outre à la pâte fromagère intermédiaire, des stabilisants ou texturants, tels que des gommes (gomme guar, gomme xanthane), des carraghénanes, de l'amidon. Ces additifs sont ajoutés dans des teneurs inférieures à 3% et de préférence inférieures à 1 % du poids du produit fini

Pour fabriquer des fromages du type fromage frais fondu, on incorpore en outre à la pâte fromagère intermédiaire, telle qu'elle a été définie précédemment, des sels de fonte en des teneurs inférieures à 3%, de préférence inférieure à 2%. Ces sels de fonte sont des sels utilisés habituellement en fabrication de fromage fondu, ce sont par exemple des polyphosphates ou des citrates de sodium, de potassium ou de magnésium.

L'invention va maintenant être illustrée à l'aide d'exemples.

### Exemple 1 : Procédé de fabrication de fromages frais thermisé.

On réalise un caillé acide obtenu par fermentation lactique à une température de 25°C à l'aide d'un mélange lactobacilles/-streptocoques avec un taux de 5.10⁶ cfu / g jusqu'à obtenir un Ph de 4,7 qui est le point isoélectrique de la caséine. Il en résulte une coagulation du lait.

On élimine alors le lactosérum par centrifugation à 25°C. Le caillé obtenu est enrichi en crème afin d'obtenir un produit ayant un extrait sec de 35% et une teneur en matière grasse exprimée en gras sur sec de 60%.Le mélange est effectué à une température de 45°C dans un échange ur thermique à surface raclée suivi d'une opération de r texturation à la même température

Le produit obtenu est alors soumis à un traitement thermique pendant 2 mn à une température de 120 °C en utilisant un dispositif de chauffage ohmique comprenant un mélangeur dans la zone de chauffage dont la vitesse de rotation est de 250 tr/min.

On refroidit alors le produit par refroidissement flash jusqu'à une température de 90°C, puis on l'envoie dans un homog énéisateur à haute pression (250 bars).

Le fromage obtenu est alors conditionné à chaud (80°C) puis refroidi en réfrigérateur.

Le fromage frais thermisé ainsi obtenu a été soumis pour dégustation à un jury d'experts qui ont indiqué que le fromage obtenu restait dans le domaine des fromages frais sans défaut de texture (en particulier il n'est pas farineux), la texture des produits étant similaire à celle d'un fromage frais réalisé de manière classique par traitement du caillé dans un cutter à une température de 85°C. En outre, il a été constaté que les propriétés physico-chimiques (propriétés rhéologiques) étaient identiques à ce type de produit.

On a en outre effectué des tests de pénétrométrie sur un TA x T2. Les résultats de ces essais sont indiqués dans le tableau 1. Ils ont été réalisés en appliquant le protocole suivant :
- sonde cylindrique de diamètre 6 mm ;
- vitesse de pointe : descente : 0,5 mn/s, montée : 1 mm/s ;
- distance de pénétration : 10 mm ;
- température du test : 9°C.

**Tableau 1**

| Résultat du test de pénétrométrie : | | |
|---|---|---|
| Echantillon | Force (N) | Aire (N.s.) |
| Témoin | 0,55 | 9,22 |
| Fromage selon l'invention | 0,49 | 8,35 |

On constate sur ces résultats que les différences sont très faibles entre le témoin qui a été réalisé à basse température en cutter selon les techniques classiques de fabrication de fromage frais thermisé, et les résultats obtenus selon le fromage réalisé selon l'invention avec un traitement thermique à 120°C par chauffage ohmique. En outre, on constate que les textures des deux produits sont très comparables.

Les fromages ainsi obtenus peuvent être conservés hors froid pendant une durée relativement importante pouvant atteindre six mois.

### Exemple 2 : Procédé de fabrication d'un fromage frais fondu (Premier mode de réalisation).

On prépare un caillé identique à celui de l'exemple précédent, enrichi en crème pour obtenir un extrait sec de 45% et une teneur en matière grasse de 70% exprimé en gras sur sec.

On introduit dans le caillé un arôme, par exemple un arôme de fraise, et on ajoute 1% de sel de fonte sous forme d'un mélange polyphosphate citrate de sodium.

Le mélange obtenu subit alors une première opération de traitement thermique à 90°C pendant 5 mn sous cisaillement dans un cuiseur du type cutter ayant une vitesse de rotation de 750 à 3000 rpm.

Cette cuisson est suivie d'une opération de texturation en cuve pendant 15 mn sous agitation douce à une température de 80°C.

En sortie de texturation, le fromage subit un deuxième traitement à 130°C pendant 1 mn par passage dans une cellule de chauffe ohmique et le produit obtenu est alors refroidi à 90°C par refroidissement flash puis il est conditionné à cette température sous forme de portion enrobée d'aluminium.

Le fromage ainsi obtenu a été soumis pour dégustation à un jury d'expert qui l'a comparé à des produits témoins obtenus par un seul traitement thermique à 90°C suivi d'un traitement de texturation mais n'ayant pas subi de traitement thermique à haute température. Comme l'indique le tableau ci-dessous, les experts n'ont constaté aucune différence en terme de goût et de texture entre le fromage réalisé selon l'invention et les fromages donnés à titre d'exemple. En particulier, ils ont retrouvé sur les produits traités par chauffage ohmique, les caractéristiques de goût crémeux et frais et de texture que l'on peut avoir sur des témoins traités à 90°C.

**Tableau 2**

| Echantillon | Goût (noté sur 5) | Texture (noté sur 5) |
|---|---|---|
| Témoin pré fondu | 4,5 | 4,5 |
| Produit traité à 130°C (Invention) | 4,5 | 4,75 |

En outre, on a effectué des mesures de texture par tests pénétrométriques selon le même protocole opératoire que dans l'exemple précédent et on a obtenu les résultats reportés au tableau 3.

**Tableau 3**

| Pénétrométrie | Frais/ fondu Témoin (cuisson à 90°C) | Frais-fondu traité par chauffage ohmique (cuisson à 130°C) |
|---|---|---|
| Force Maximale (N) | 2,32 | 2,57 |

Les résultats de pénétrométrie sont similaires pour les produits témoins et les fromages traités à haute température par chauffage ohmique. On constate ainsi que le traitement de chauffage ohmique, qui permet de sécuriser le produit en terme de microbiologie, permet surtout de garder les caractéristiques originelles organoleptiques du produit par rapport à un témoin traité à 90°

Les fromages ainsi obtenus peuvent être conservés hors froid pendant une durée relativement importante pouvant atteindre six mois.

### Exemple 3 : Procédé de fabrication de fromage frais fondu (Deuxième mode de réalisation).

On prépare un mélange de caillé-, de crème et d'ingrédients aromatiques (ail, fines herbes) et de sels de fonte identiques à celui de l'exemple précédent, et on mélange ces éléments dans un cutter à 45°C avec une agitation correspondant à une vitesse de rotation de 1500 tr/min pendant 2 mn. Le mélange ainsi obtenu est envoyé directement dans un réacteur de chauffage ohmique où il subit un traitement thermique à une température de 115°C pendant 30 s.

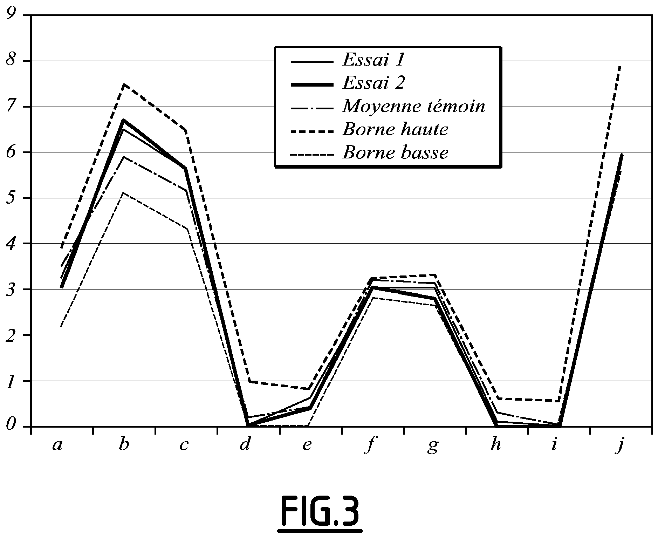

Le produit traité dans l'installation de chauffage ohmique est ensuite refroidi à 95°C par refroidissement flash, puis soumis à un e étape de texturation à chaud à 90°C en cuve, conditionné en portion et refroidi jusqu'à 4°C par passage sous un tunnel réfrigérant. Le fromage ainsi obtenu a été soumis également à un jury d'experts pour évaluer les caractéristiques sensorielles de ces produits. Les experts ont comparé les produits obtenus par deux essais successifs, qui ont été comparés à un fromage frais fondu de référence tel que celui qui est décrit dans l'exemple 2. Les résultats de ces tests sont représentés sur la figure 3 dans laquelle on donne les résultats du premier essai, les résultats du deuxième essais, des limites hautes et des limites basses pour chacune des caractéristiques sensorielles qui sont des limites d'acceptabilité du produit. Enfin, les valeurs moyennes obtenues sur un fromage témoin.

Sur cette figure, les différentes caractéristiques sensorielles sont les suivantes :
a) couleur ;
b) fermeté ;
c) pâteux ;
d) farineux ;
e) gras ;
f) salée ;
g) acide ;
h) ame ;
i) lactique ;
j) diacétyl.

Par ailleurs, on a réalisé sur ces produits des tests de conservation à 8 semaines hors froid en les maintenant à 37°C. Dans ces essais, on a comparé un échantillon témoin de fromage selon l'art antérieur, et d'autre part un échantillon de fromage conforme à l'invention.

Les résultats sont représentés au tableau suivant où on a mesuré au bout d'une semaine, de deux semaines, de quatre semaines et de huit semaines, l'évolution d'extraits secs (ES), le Ph, la flore totale, les spores de la flore anaérobigazogène (SAG), la flore sulfito-réductrice (SR), les spores des bacillus et bacillus cereus (ES exprimé en g/100g et flore en cfu/g).

**Tableau 4**

| Témoin | ES | pH | Flore totale | SAG | SR | Bacillus cereus | Spores bacillus |
|---|---|---|---|---|---|---|---|
| s+1 | 47.1 | 5.34 | 110 | <3 | 0 | 20 | <10 |
| s+2 | 47.3 | 5.33 | 47000 | <3 | 2 | 50 | <10 |
| s+4 | 47.7 | 5.22 | 160000 | 4 | 0 | 20 | <10 |
| s+8 | 47.9 | 4.91 | <10 | <3 | 0 | 10 | <10 |

**Tableau 5**

| Essai (110°C) | ES | pH | Flore totale | SAG | SR | Bacillus cereus | Spores bacillus |
|---|---|---|---|---|---|---|---|
| s+1 | 47.9 | 5.29 | 30 | <3 | 0 | <10 | <10 |
| s+2 | 48.6 | 5.3 | 10 | <3 | 0 | <10 | <10 |
| s+4 | 49.5 | 5.32 | 560 | <3 | 0 | <10 | <10 |
| s+8 | 49.5 | 5.25 | <10 | <3 | 0 | <10 | <10 |

Ces essais de conservation à la température de 37°C permettent de simuler une conservation hors froid des produits sachant qu'une conservation de 8 semaines à 37°C peut être assimilée à une conservation de plus longue durée équivalente à 5-6 mois à 4 -5°C Ils montrent que le traitement thermique selon l'invention permet de réduire significativement la flore totale au cours de la conservation, ainsi que de réduire la flore contaminante potentiellement pathogène des bacillius. Cette réduction des flores potentiellement pathogènes permet une conservation de ces produits hors froid relativement importante qui peut atteindre 6 mois

La flore totale proche entre le témoin et l'essai à 8 semaines s'explique par la différence de Ph. L'augmentation de l'acidité du témoin entraîne l'inhibition du développement de la flore mais une dégradation des caractéristiques organoleptiques (produits qui deviennent de plus en acides, ne correspondent plus au même univers de produits et deviennent immangeables à 6 Mois de conservation) contrairement à l'essai dont le pH n'évolue pas.

## Revendications

1. Procédé de fabrication d'un fromage selon lequel :
- on prépare une pâte fromagère intermédiaire comprenant :
- un caillé de fromagerie égoutté, ou
- un caillé reconstitué par mélange et hydratation de concentrés protéiques et de matières grasses animales ou végétales ;
- on effectue sur la pâte fromagère un premier traitement à une température comprise entre 40° et 90° C ;
- on effectue un traitement de texturation à la température du premier traitement pour obtenir une pâte texturée ;
- on soumet la pâte texturée à un deuxième traitement thermique par chauffage ohmique à une température comprise entre 90° et 140° C pendant 10 s à 5 mn ;
- on refroidit la pâte obtenue à une température inférieure à 100°C pour obtenir un fromage, et
- on conditionne le fromage.

2. Procédé selon la revendication 1, dans lequel le traitement thermique par chauffage ohmique est effectué à une température supérieure à 105°C.

3. Procédé selon la revendication 1 ou la revendication 2, dans lequel la pâte fromagère intermédiaire comprend un caillé de fromagerie égoutté et le caillé de fromagerie est obtenu par coagulation acide de lait.

4. Procédé selon l'une quelconque des revendications 1 à 3, dans lequel la pâte fromagère intermédiaire comprend un caillé de fromagerie égoutté et le caillé de fromagerie est obtenu à partir de lait standardisé en matières grasses et protéines.

5. Procédé selon la revendication 1 ou 2, dans lequel, la pâte fromagère intermédiaire comprend un caillé reconstitué par mélange et hydratation de concentrés protéiques et de matières grasses animales ou végétales et les concentrés protéiques sont des concentrés protéiques laitiers.

6. Procédé selon l'une quelconque des revendications 1 à 4, dans lequel la pâte fromagère intermédiaire comprend un caillé de fromagerie égoutté, et dans lequel après égouttage du caillé, on ajoute un ou plusieurs ingrédients complémentaires pris parmi une matière grasse telle que de la crème, des concentrés protéiques laitiers, des substances aromatiques, des substances nutritionnelles tels que les oligoéléments, des vitamines, et des produits laitiers fermentés, en des teneurs inférieures à 50%.

7. Procédé selon la revendication 6, dans lequel le premier traitement à une température comprise entre 40° et 90°C est une opération de mélange du caillé égoutté et des ingrédients complémentaires à une température comprise entre 40°C et 50°C.

8. Procédé selon l'une quelconque des revendications 1 à 7, dans lequel on ajoute à la pâte fromagère intermédiaire un ou plusieurs stabilisant ou texturant, par exemple des gommes, des carraghénanes, de l'amidon, dans une proposition inférieure à 3%.

9. Procédé selon l'une quelconque des revendications 1 à 7, dans lequel on ajoute à la pâte fromagère intermédiaire un ou plusieurs sels de fonte.

## Patentansprüche

1. Verfahren zum Herstellen eines Käses, wobei:
- eine Zwischenkäsemasse hergestellt wird, aufweisend:
- einen abgetropften Käsebruch oder
- einen durch Mischen und Hydratation von Proteinkonzentraten und tierischen oder pflanzlichen Fetten wiederhergestellten Bruch,
- eine erste Behandlung bei einer Temperatur von zwischen 40° und 90°C an der Käsemasse durchgeführt wird,
- eine Texturierungsbehandlung bei der Temperatur der ersten Behandlung durchgeführt wird, um eine texturierte Masse zu erhalten,
- die texturierte Masse einer zweiten Wärmebehandlung durch ohmsches Erhitzen bei einer Temperatur von zwischen 90°C und 140°C während 10 Sekunden bis 5 Minuten unterzogen wird,
- die erhaltene Masse auf eine Temperatur von weniger als 100°C abgekühlt wird, um einen Käse zu erhalten, und
- der Käse verpackt wird.

2. Verfahren gemäß Anspruch 1, wobei die Wärmebehandlung durch ohmsches Erhitzen bei einer Temperatur von größer als 105°C durchgeführt wird.

3. Verfahren gemäß Anspruch 1 oder Anspruch 2, wobei die Zwischenkäsemasse einen abgetropften Käsebruch aufweist und der Käsebruch durch Säure-Koagulation von Milch erhalten wird.

4. Verfahren gemäß irgendeinem der Ansprüche 1 bis 3, wobei die Zwischenkäsemasse einen abgetropften Käsebruch aufweist und der Käsebruch aus in Bezug auf Fett und Proteine standardisierter Milch erhalten wird.

5. Verfahren gemäß Anspruch 1 oder 2, wobei die Zwischenkäsemasse einen Bruch aufweist, der durch Mischen und Hydratation von Proteinkonzentraten und tierischen oder pflanzlichen Fetten wiederhergestellt wird, und die Proteinkonzentrate Milchproteinkonzentrate sind.

6. Verfahren gemäß irgendeinem der Ansprüche 1 bis 4, wobei die Zwischenkäsemasse einen abgetropften Käsebruch aufweist, und wobei nach dem Abtropfen des Bruchs ein oder mehrere zusätzliche Inhaltsstoffe, die entnommen werden aus einem Fett, zum Beispiel Sahne, Milchproteinkonzentraten, Aromastoffen, Nährstoffen, wie zum Beispiel Spurenelementen, Vitaminen und fermentierten Milchprodukten, mit Gehalten von weniger als 50% beigefügt werden.

7. Verfahren gemäß Anspruch 6, wobei die erste Behandlung bei einer Temperatur von zwischen 40° und 90°C ein Vorgang des Mischens des abgetropften Bruchs und der zusätzlichen Inhaltsstoffe bei einer Temperatur von zwischen 40°C und 50°C ist.

8. Verfahren gemäß irgendeinem der Ansprüche 1 bis 7, wobei der Zwischenkäsemasse ein oder mehrere Stabilisatoren und Texturierungsmittel, zum Beispiel Gummis, Carrageene, Stärke in einem Verhältnis von weniger als 3% beigefügt werden.

9. Verfahren gemäß irgendeinem der Ansprüche 1 bis 7, wobei der Zwischenkäsemasse ein oder mehrere Schmelzsalze beigefügt werden.

## Claims

1. Method of producing a cheese, according to which:
- an intermediate cheese body is prepared, comprising:
- a drained cheese curd, or
- a curd reconstituted by mixing and hydrating animal or vegetable protein and fat concentrates;
- a first treatment at a temperature of from 40 to 90°C is carried out on the cheese body;
- a texturizing treatment is carried out at the temperature of the first treatment in order to obtain a textured body;
- the textured body is subjected to a second heat treatment by ohmic heating at a temperature comprised between 90° and 140°C for from 10 seconds to 5 minutes;
- the body obtained is cooled to a temperature below 100°C in order to obtain a cheese; and
- the cheese is packaged.

2. Method according to claim 1, wherein the heat treatment by ohmic heating is carried out at a temperature above 105°C.

3. Method according to claim 1 or claim 2, wherein the intermediate cheese body comprises a drained cheese curd and the cheese curd is obtained by acid coagulation of milk.

4. Method according to any one of claims 1 to 3, wherein the intermediate cheese body comprises a drained cheese curd and the cheese curd is obtained from fat- and protein-standardized milk.

5. Method according to any one of claims 1 to 4, wherein the intermediate cheese body comprises a curd reconstituted by mixing and hydrating animal or vegetable protein and fat concentrates and the protein concentrates are milk protein concentrates.

6. Method according to any one of claims 1 to 4, wherein the intermediate cheese body comprises a drained cheese curd and, and wherein, after draining of the curd, there are added one or more additional ingredients selected from a fat such as cream, milk protein concentrates, flavouring substances, nutritional substances such as oligoelements, vitamins, and fermented milk products, in amounts below 50%.

7. Method according to claim 6, wherein the first treatment at a temperature comprised between 40 and 90°C is an operation of mixing the drained curd and the additional ingredients at a temperature comprised between 40 and 50°C.

8. Method according to any one of claims 1 to 7, wherein there are added to the intermediate cheese body one or more stabilizers or texturizing agents, for example gums, carrageenans, starch, in a proportion below 3%.

9. Method according to any one of claims 1 to 7, wherein one or more melting salts are added to the intermediate cheese body.
